# DEMANDE DE BREVET EUROPEEN

(11) **EP 3 226 193 A1**
(43) Date de publication de la demande: **04.10.2017**
(21) Numéro de dépôt: 17155388.6
(22) Date de dépôt: 09.02.2017
(51) Int. Cl.: G06Q 30/02

(54) **PROCEDE ET SYSTEME D'AFFICHAGE DYNAMIQUE D'AU MOINS UNE PUBLICITE VIDEO DANS UNE PAGE INTERNET DESTINEE A ETRE VUE PAR UN UTILISATEUR**

(30) Priorité: 31.03.2016 FR 1652817
(71) Demandeur: Mediabong, 75002 Paris (FR)
(72) Inventeur: BURY, Laurent, 75015 Paris (FR); CLAUDON, Pierre, 54500 VANDOEUVRE (FR)
(74) Mandataire: Casalonga

(57) **Abrégé**

Procédé d'affichage dynamique d'au moins une publicité vidéo dans une page internet destinée à être vue par un utilisateur, comprenant des étapes suivantes :
on détermine des informations identifiant la page internet,
on détermine au moins un emplacement vidéo dans la page internet dans lequel la publicité vidéo est à afficher en analysant la mise en page de la page internet en fonction du code source de la page internet ou en fonction d'un algorithme heuristique prédéfini, et en déterminant au moins un emplacement en fonction de la mise en page et de règles prédéfinies,
on détermine au moins une publicité vidéo à afficher en fonction des informations identifiant la page internet, et
on commande l'affichage de la publicité vidéo en fonction des positions déterminées des emplacements vidéo.

## Description

L'invention a pour domaine technique la diffusion de contenus vidéo dans des pages internet, et plus particulièrement la diffusion de publicités vidéo en fonction du comportement de l'utilisateur.

Les sites internet et applications, notamment applications mobiles pour smartphone (téléphone intelligent, en langue française) comprennent des documents ou pages (généralement au format html), pouvant conjuguer plusieurs types de contenus tel que des textes, des images, et des vidéos, issus tant de contenus éditoriaux propres au site que de contenus publicitaires généralement issus de tiers fournisseurs de publicités vidéo.

Dans le cas particulier des contenus publicitaires sous forme de vidéos, ils peuvent être insérés de façon manuelle et statique ou de façon dynamique au sein desdites pages.

D'une manière générale, les contenus vidéo sont lus au moyen d'un programme de lecture vidéo. Actuellement, de tels programmes de lecture vidéo utilisent le plus souvent une technologie dite de « streaming » permettant le transfert en temps réel des données permettant d'afficher la vidéo sans nécessiter le transfert de la totalité de la vidéo avant d'en démarrer la lecture.

Des systèmes publicitaires permettent d'afficher une publicité vidéo, avant, pendant ou après la diffusion d'un contenu vidéo, dans le cas d'une publicité dite « in-stream » ou sans le support d'un contenu vidéo, dans le cas d'une publicité dite « outstream ».

Le démarrage de ces publicités vidéos peut être initié activement par l'utilisateur, automatiquement à l'affichage de la page, ou activées par le déroulement de la page par l'utilisateur.

Ces publicités vidéo peuvent être ciblées selon des critères variés, principalement selon les caractéristiques prédites ou connues de l'utilisateur telles que les caractéristiques socio-démographiques ou l'historique de comportement.

Ces publicités peuvent être délivrées de diverses façons : suite à un appel statique (appel à une page internet tierce comprenant la publicité depuis la page internet d'accueil), un appel dynamique (appel à une page internet tierce comprenant la publicité incluant des paramètres ou des métadonnées) ou un appel sous forme programmatique (enchères en temps réel pour l'utilisation de l'emplacement publicitaire).

Toutefois, quels que soient les modes de diffusion et de démarrage choisis, les publicités vidéo sont actuellement limitées à des emplacements prédéfinis, qui peuvent ne plus se situer dans le champ de vision de l'utilisateur lors du déroulement d'une page internet. Dans un tel cas, la publicité qui est diffusée à destination de l'utilisateur n'est en réalité par vue par celui-ci. Il en découle notamment des statistiques de diffusion faussées.

Il existe ainsi un besoin pour un procédé et un système permettant une diffusion de publicités vidéo sur au moins un emplacement vidéo d'une page internet permettant de maintenir la visibilité de la publicité vidéo durant la visualisation d'une page internet par l'utilisateur.

L'invention a pour objet un procédé d'affichage dynamique d'au moins une publicité vidéo dans une page internet destinée à être vue par un utilisateur. Le procédé comprend des étapes suivantes :
on détermine des informations identifiant la page internet,
on détermine au moins un emplacement vidéo dans la page internet dans lequel la publicité vidéo est à afficher en analysant la mise en page de la page internet en fonction du code source de la page internet ou en fonction d'un algorithme heuristique prédéfini, et en déterminant au moins un emplacement en fonction de la mise en page et de règles prédéfinies,
on détermine au moins une publicité vidéo à afficher en fonction des informations identifiant la page internet, et
on commande l'affichage de la publicité vidéo en fonction des positions déterminées des emplacements vidéo.

Pour déterminer au moins une publicité vidéo à afficher, on peut réaliser les étapes suivantes :
s'il a été déterminé que la page internet comprend au moins un emplacement vidéo, on définit un emplacement vidéo provisoire, dans lequel on active un programme de lecture vidéo,
on envoie une requête de publicité à afficher, en fonction des informations identifiant la page internet,
on reçoit en retour la publicité à afficher,
on démarre la lecture de la publicité à afficher par l'intermédiaire du programme de lecture vidéo et on met la lecture en pause, puis
on déplace le programme vidéo de l'emplacement provisoire vers l'emplacement vidéo de la page internet et on reprend la lecture de la publicité.

Pour déterminer au moins une publicité vidéo à afficher, on peut alternativement réalise les étapes suivantes :
s'il a été déterminé que la page internet comprend au moins un emplacement vidéo, on définit un emplacement vidéo provisoire, dans lequel on active un programme de lecture vidéo,
on envoie une requête de publicité à afficher, en fonction des informations identifiant la page internet, et, simultanément, on déplace le programme vidéo de l'emplacement provisoire vers l'emplacement vidéo de la page internet,
on reçoit en retour la publicité à afficher,
on démarre la lecture de la publicité à afficher par l'intermédiaire du programme de lecture vidéo.

Pour commander l'affichage de la publicité vidéo, on peut déterminer le déplacement du champ de vue de l'utilisateur par rapport à la page internet,
dès qu'un déplacement est détecté, on détermine si l'emplacement vidéo comprenant la publicité vidéo satisfait des critères de visibilité.

Les critères de visibilité d'un emplacement peuvent comprendre une valeur de seuil du rapport de la surface de l'emplacement divisé par la surface de l'emplacement visible par l'utilisateur.

On peut déterminer le champ de vue de l'utilisateur, on peut déterminer la partie de la page internet entrant dans le champ de vue de l'utilisateur, et on peut déterminer si les critères de visibilité de l'emplacement sont satisfaits en fonction des positions respectives de l'emplacement dans la page internet et de la position de la partie de la page internet entrant dans le champ de vue.

On peut mettre à jour la partie de la page internet entrant dans le champ de vue de l'utilisateur en fonction de la partie de la page internet entrant dans le champ de vue précédemment déterminée et en fonction du déplacement de l'utilisateur sur cette page.

Lorsque les critères de visibilité de l'emplacement comprenant la publicité vidéo ne sont plus satisfaits, on peut mettre en pause la publicité vidéo dans cet emplacement, puis,

lorsque les critères de visibilité d'un emplacement sont à nouveau satisfaits, on peut reprendre dans cet emplacement la lecture de la publicité vidéo qui a été mise en pause.

La page internet peut comprendre un premier emplacement vidéo et au moins un deuxième emplacement vidéo, le premier emplacement vidéo comprenant la publicité vidéo. Le procédé peut alors comprendre des étapes suivantes :
lorsque les critères de visibilité du premier emplacement vidéo ne sont plus satisfaits, on met en pause la publicité vidéo, puis
lorsque les critères de visibilité d'un deuxième emplacement sont satisfaits, on reprend dans le deuxième emplacement la publicité vidéo qui a été mise en pause dans le premier emplacement.

Un emplacement vidéo peut être soit inséré dans le contenu de la page internet soit en superposition du contenu de la page internet.

On peut déterminer localement ou sur un serveur distant les informations identifiant la page internet et/ou au moins un contenu vidéo à afficher.

L'invention a également pour objet un système d'affichage dynamique d'au moins une publicité vidéo dans une page internet destinée à être vue par un utilisateur, comprenant
un script compris dans la page internet, apte à déterminer des informations identifiant la page internet, et à déterminer au moins un emplacement vidéo dans la page internet dans lequel la publicité vidéo est à afficher en analysant la mise en page de la page internet en fonction du code source de la page internet ou en fonction d'un algorithme heuristique prédéfini, et en déterminant au moins un emplacement en fonction de la mise en page et de règles prédéfinies,
un programme de lecture vidéo exécuté par l'utilisateur apte à requérir la publicité à afficher et à commander l'affichage la publicité vidéo dans la page internet, et
une plate-forme publicitaire est apte à recevoir les requêtes de publicités vidéo du programme de lecture vidéo, à adresser des requêtes de publicité à des tiers fournisseurs de publicités vidéo et à émettre une publicité vidéo ou une liste de publicités vidéo à destination du programme de lecture vidéo à partir des informations identifiant la page internet et la mise en page de la page internet reçues du script par l'intermédiaire du programme de lecture vidéo.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principales étapes du procédé selon l'invention,
- la figure 2 illustre un premier mode de réalisation de la troisième étape de commande de l'affichage de la publicité du procédé,
- la figure 3 illustre un deuxième mode de réalisation de la troisième étape de commande de l'affichage de la publicité du procédé,
- la figure 4 illustre un troisième mode de réalisation de la troisième étape de commande de l'affichage de la publicité du procédé,
- la figure 5 illustre un quatrième mode de réalisation de la troisième étape de commande de l'affichage de la publicité du procédé, et
- la figure 6 illustre un autre mode de réalisation de la troisième étape de commande de l'affichage de la publicité du procédé.

Un utilisateur, notamment un internaute, se connecte à un réseau, notamment le réseau internet au moyen d'un appareil (tel qu'un ordinateur, un téléphone intelligent, une télévision connectée ou tout autre dispositif adapté,...). L'utilisateur émet alors une requête d'accès et de visualisation à destination d'une page internet. Il reçoit en retour des données permettant l'affichage de la page internet sur l'appareil utilisé pour se connecter au réseau, ainsi que l'interaction de l'utilisateur avec la page. L'alternance de requêtes et de données reçues en retour se poursuit à chaque nouvelle action de l'utilisateur.

Lorsque la page internet appelée comprend le procédé selon l'invention, celui-ci communique avec une plate-forme publicitaire en mesure de délivrer une publicité ou de faire appel à un ou plusieurs tiers fournisseurs de publicités vidéo. La plate-forme sélectionne le cas échéant une publicité vidéo et la transmet au procédé selon l'invention, compris dans la page internet.

Ladite publicité vidéo est affichée dans au moins un emplacement vidéo de la page internet. En fonction du comportement de l'utilisateur sur la page internet, l'affichage de cette publicité pourra être modifié, par exemple déplacé entre plusieurs emplacements vidéo, ou mis en pause pour être repris ultérieurement, en fonction de la page internet concernée et de critères de visibilité et d'affichage, comprenant notamment la visibilité de la publicité sur l'écran de l'utilisateur. Cette publicité vidéo peut également se poursuivre dynamiquement d'un emplacement vidéo de la page à un autre par l'intermédiaire d'une synchronisation.

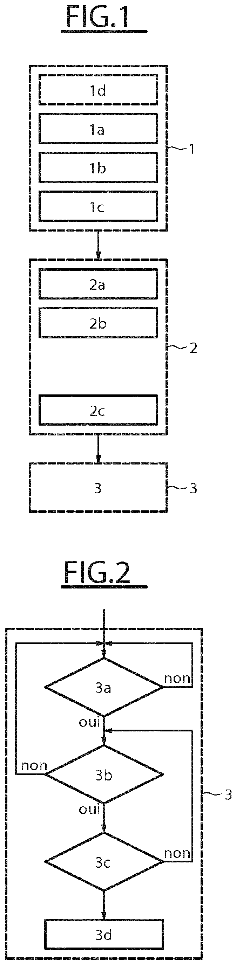

Sur la figure 1, on peut voir les principales étapes du procédé d'affichage dynamique selon l'invention. Le procédé comprend une première étape 1 de détermination de la position d'emplacements vidéo dans la page internet, une deuxième étape 2 de détermination de la publicité à afficher, et une troisième étape 3 de commande de l'affichage de la publicité en fonction des positions déterminées des emplacements vidéo et du comportement de l'utilisateur.

La première étape 1 de détermination de la position d'emplacements vidéo dans la page internet comprend elle-même plusieurs sous-étapes.

Au cours d'une première sous-étape 1a, on détermine des données d'identification de la page internet. Les données d'identification de la page internet peuvent être son adresse internet, son propriétaire, sa date, son contexte, ses thèmes ou caractéristiques sémantiques ou une référence interne de la plate-forme publicitaire avec laquelle le procédé communique.

Au cours d'une deuxième sous-étape 1b, on détermine la mise en page de la page internet de façon statique ou dynamique. On détermine statiquement la mise en page en examinant le code informatique décrivant la mise en forme de la page internet (par exemple code html, code css...) afin d'y repérer des éléments, titres, balises, paragraphes, etc. permettant d'identifier selon des règles préétablies si un emplacement est compatible pour l'affichage d'une publicité vidéo.

On détermine dynamiquement la mise en page en utilisant un algorithme heuristique permettant de déduire du code informatique de la page internet, la mise en forme de la page internet la position des principaux éléments le composant, et d'identifier si un emplacement est compatible pour l'affichage d'une publicité vidéo.

Pour réaliser cela, on peut identifier des blocs contenant du texte et déterminer la position absolue et relative des blocs de texte dans la page.

Parmi les blocs de texte déterminés, de façon exclusive ou en synergie avec les autres conditions de détermination, on détermine des paragraphes comme étant des blocs de texte longs comprenant au moins une première quantité de mots, par exemple dix mots. Cela permet de ne pas considérer les blocs de texte qui pourraient être lus rapidement par l'utilisateur, ou qui ne sont pas significatifs en termes de mise en page.

Parmi les blocs de texte déterminés, on peut également déterminer, de façon exclusive ou en synergie avec les autres conditions de détermination, des paragraphes comme étant des blocs de texte comprenant moins d'une première fraction de liens hypertexte, ou moins d'une deuxième fraction supérieure à la première fraction de liens hypertexte si le bloc de texte considéré est précédé et suivi par des blocs de texte long. Cela permet également de ne pas considérer les blocs de texte qui pourraient distraire l'utilisateur en le redirigeant vers d'autres pages internet. Dans le cas d'une redirection, la vidéo publicitaire pourrait ne pas être vue par l'utilisateur.

Parmi les blocs de texte déterminés, on peut également déterminer, de façon exclusive ou en synergie avec les autres conditions de détermination, des paragraphes comme étant des blocs de texte déterminés, suivis d'au moins un élément "séparateur" (tels que <p>, <div> en langage de programmation html).

On identifie par ailleurs si la page internet comprend des éléments de hiérarchisation de l'information (balise H1, H2,...Hn) ainsi que leurs positions. Dans un tel cas, chaque bloc de texte pertinent situé immédiatement avant un élément de hiérarchisation comprend l'élément hiérarchique auquel l'élément de hiérarchisation fait référence.

Au cours d'une troisième sous-étape 1c, on détermine le positionnement d'au moins un emplacement vidéo dans la page internet en fonction des informations de mise en page définie à la deuxième sous-étape 1b.

En particulier, on détermine les emplacements vidéo possibles en fonction du nombre de paragraphes, de leur position dans la page et du champ de vue de l'utilisateur. Les règles suivantes illustrent un exemple de détermination d'emplacement vidéos.

On détermine que le premier emplacement vidéo est situé immédiatement après le premier paragraphe déterminé qui ne comprend pas une image ou une vidéo, ou qui n'est pas immédiatement suivi par une image ou une vidéo.

On détermine que les emplacements vidéo suivants sont situés après un paragraphe, à une distance égale d'au moins un champ de vue de l'emplacement vidéo précèdent. Si la longueur de la page est insuffisante pour remplir cette condition, on détermine que le dernier emplacement vidéo est situé après le dernier paragraphe.

Dans une variante, si la longueur de la page est inférieure au champ de vue de l'utilisateur, le deuxième emplacement vidéo correspond à un emplacement vidéo flottant ou est supprimé.

Un mode de réalisation alternatif de la première étape 1 comprend une troisième sous-étape 1d réalisée avant la première sous-étape 1a. Au cours de la troisième sous-étape 1d, on détermine des données d'identification de l'utilisateur. Les données d'identification de l'utilisateur peuvent être un identifiant unique du navigateur internet employé compris par exemple dans un cookie préalablement déposé sur le poste de l'utilisateur par la plate-forme publicitaire ou un tiers autorisé, d'autres technologies d'identification (tel que par exemple le « fingerprint » , la récupération d'informations du navigateur ou du poste de l'utilisateur comprenant par exemple l'identification de l'appareil de l'utilisateur (ordinateur, tablette, smartphone, tv...), de sa géolocalisation, de son « user-agent ».

On définit le « fingerprint » comme une méthode permettant d'identifier un utilisateur selon les caractéristiques de son navigateur internet, du système d'exploitation permettant l'exécution du navigateur, de modules additionnels (« plugins » en langue anglaise) pour ledit navigateur, etc ... Le « fingerprint » génère une empreinte unique basée sur une combinaison de plusieurs éléments : liste des plugins du navigateurs, liste des polices installées sur l'ordinateur, user agent du navigateur, résolution de l'écran, configuration horaire de la machine (et d'autres également, qui varient régulièrement).

On définit un « user-agent » comme une chaîne de caractères permettant d'identifier un navigateur. Par exemple, le user agent « Mozilla/5.0 (Windows NT 10.0; WOW64) AppleWebKit/537.36 (KHTML, like Gecko) Chrome/48.0.2564.109 Safari/537.36 FirePHP/4Chrome » représente un navigateur « Google Chrome » en version 48.0.2564.109, utilisant le moteur webkit v. 537.36 et le plugin firePHP 4. Le tout étant exécuté sur Windows 10.

La deuxième étape 2 de détermination de la publicité à afficher débute par une première sous-étape 2a. Au cours de cette première sous-étape 2a, s'il a été déterminé que la page internet comprend au moins un emplacement vidéo, on définit un emplacement vidéo provisoire dans lequel le programme de lecture vidéo L2 est activé.

L'emplacement vidéo provisoire est disposé dans une zone de la page internet qui n'est pas visible par l'utilisateur. Cela permet, dans le cas où aucune publicité vidéo ne serait disponible, de ne pas altérer la mise en page de la page internet vue par l'utilisateur.

On peut réaliser cela, dans le cas d'une page internet codée en HTML, en créant une nouvelle division (« div ») avec des marges négatives. Le programme de lecture vidéo est chargé dans cet emplacement vidéo provisoire avec une position absolue par rapport à la page (par opposition à une position relative par rapport à un élément de la page) de sorte à pouvoir être déplacé ultérieurement dans n'importe quelle position souhaitée de la page sans avoir à recharger le programme de lecture vidéo.

Le procédé se poursuit au cours d'une deuxième sous-étape 2b, au cours de laquelle on envoie une requête de publicité à afficher, par exemple à une plate-forme publicitaire, en fonction des informations d'identification de la page internet. La plate-forme peut renvoyer l'information d'une ou plusieurs publicités vidéo à afficher et leur ordre de diffusion. Lorsque plusieurs publicités vidéo sont à afficher, le procédé se poursuit au cours d'une troisième sous-étape 2c, au cours de laquelle on choisit la publicité à afficher.

Le programme de lecture vidéo fait appel à la première publicité vidéo de la liste. Si celle-ci est prête à être diffusée, il la met en pause. Si elle n'est pas valide ou si le temps de réponse à l'appel est excessif, il passe à la publicité suivante sur la liste jusqu'à trouver une publicité prête à être diffusée.

On déplace alors le programme de lecture vidéo de l'emplacement vidéo provisoire vers l'emplacement vidéo de la page internet et on reprend la lecture de la publicité vidéo.

Un autre mode de réalisation de l'étape 2 de détermination de la publicité à afficher va maintenant être décrit.

Au cours d'une première sous-étape 2a, s'il a été déterminé que la page internet comprend au moins un emplacement vidéo, on définit un emplacement vidéo provisoire dans lequel le programme de lecture vidéo L2 est activé.

L'emplacement vidéo provisoire est disposé dans une zone de la page internet qui n'est pas visible par l'utilisateur. Cela permet, dans le cas où aucune publicité vidéo ne serait disponible, de ne pas altérer la mise en page de la page internet vue par l'utilisateur.

On peut réaliser cela, dans le cas d'une page internet codée en HTML, en créant une nouvelle division (« div ») avec des marges négatives. Le programme de lecture vidéo est chargé dans cet emplacement vidéo provisoire avec une position absolue par rapport à la page (par opposition à une position relative par rapport à un élément de la page) de sorte à pouvoir être déplacé ultérieurement dans n'importe quelle position souhaitée de la page sans avoir à recharger le programme de lecture vidéo.

Le procédé se poursuit au cours d'une deuxième sous-étape 2b, au cours de laquelle on envoie une requête de publicité à afficher, par exemple à une plate-forme publicitaire, en fonction des informations d'identification de la page internet et, simultanément, on déplace le programme de lecture vidéo de l'emplacement vidéo provisoire vers l'emplacement vidéo de la page internet.

La plate-forme peut renvoyer l'information d'une ou plusieurs publicités vidéo à afficher et leur ordre de diffusion. Lorsque plusieurs publicités vidéo sont à afficher, le procédé se poursuit au cours d'une troisième sous-étape 2c, au cours de laquelle on choisit la publicité à afficher.

Le programme de lecture vidéo fait appel à la première publicité vidéo de la liste et début son affichage. Si celle-ci est prête à être diffusée. Si elle n'est pas valide ou si le temps de réponse à l'appel est excessif, il passe à la publicité suivante sur la liste jusqu'à trouver une publicité prête à être diffusée.

Alternativement, la deuxième sous-étape 2b comprend l'envoi d'une requête de publicité à afficher en fonction des informations d'identification de la page internet et des informations d'identification de l'utilisateur.

La figure 2 illustre un premier mode de réalisation de la troisième étape 3 de commande de l'affichage de la publicité à afficher en fonction d'au moins un emplacement vidéo et du comportement de l'utilisateur. Elle comprend une première sous-étape 3a de détermination d'un déplacement du champ de vue de l'utilisateur. Le procédé demeure à la troisième sous-étape 3a et l'exécute en boucle tant qu'un déplacement n'est pas déterminé.

Dès qu'un déplacement est détecté, le procédé se poursuit par une deuxième sous-étape 3b de détermination de la visibilité de l'emplacement vidéo comprenant la publicité en fonction de critères de visibilité prédéterminés. Parmi de tels critères, on peut citer une valeur de seuil du rapport de la surface de l'emplacement divisé par la surface de l'emplacement visible par l'utilisateur.

Pour réaliser cela, on détermine le champ de vue de l'utilisateur, on détermine la partie de la page internet entrant dans le champ de vue de l'utilisateur, et on détermine si les critères de visibilité de l'emplacement sont satisfaits en fonction des positions respectives de l'emplacement dans la page internet et de la position de la partie de la page internet entrant dans le champ de vue. L'homme du métier comprendra que le champ de vue de l'utilisateur est déterminé par la résolution du dispositif d'affichage combinée au rapport d'échelle ou zoom employé. Sur un ordinateur, le dispositif d'affichage est par exemple l'écran ou un vidéoprojecteur. Sur un téléphone intelligent, il s'agit généralement de l'écran.

Si on détermine que les critères de visibilité ne sont pas satisfaits, le procédé reprend à la première sous-étape 3a de détermination d'un déplacement du champ de vue de l'utilisateur

Si on détermine que les critères de visibilité sont satisfaits, le procédé se poursuit par une troisième sous-étape 3c de détermination de satisfaction de critères d'affichage.

De tels critères d'affichage comprennent un déplacement trop rapide de l'utilisateur, un taux moyen de visibilité de l'emplacement vidéo trop faible, la fermeture du programme de lecture vidéo dans l'emplacement vidéo, ou le profil de l'utilisateur et son historique de comportement sur des publicités.

Si de tels critères d'affichage ne sont pas satisfaits, le procédé reprend à la deuxième sous étape 3b de détermination de la visibilité de l'emplacement vidéo comprenant la publicité.

Si les critères d'affichage sont satisfaits, le procédé se poursuit par une quatrième sous étape 3d de commande de l'affichage de la publicité dans au moins un emplacement vidéo.

Au cours de cette quatrième sous-étape 3d, on commande le déplacement de la publicité de l'emplacement vidéo temporaire vers l'emplacement vidéo satisfaisant les critères d'affichage et le démarrage de la publicité.

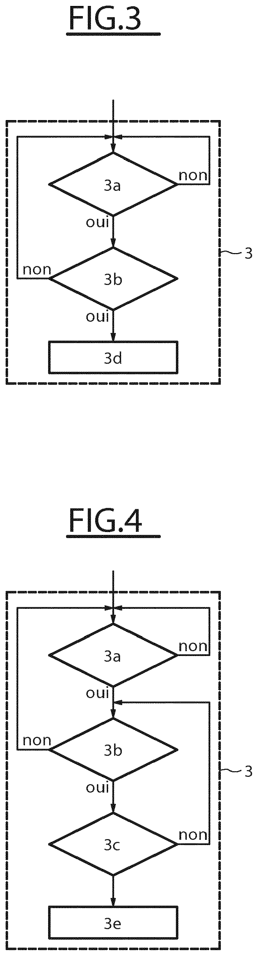

La figure 3 illustre un deuxième mode de réalisation de la troisième étape 3 de commande de l'affichage de la publicité, similaire au premier mode de réalisation, et dans lequel les éléments similaires portent les mêmes références. Il diffère du premier mode de réalisation de par l'absence de sous étape 3c de détermination de satisfaction de critères d'affichage. Il diffère également du premier mode de réalisation de par la mise en pause de la publicité dès que l'emplacement vidéo comprenant la publicité ne satisfait plus les critères de visibilité et la reprise de la publicité dès que les critères de visibilité sont de nouveau satisfaits.

Pour réaliser cela, lorsqu'au cours de la deuxième sous-étape 3b, on détecte que l'emplacement vidéo comprenant la publicité ne satisfait plus les critères de visibilité, le procédé se poursuit à la quatrième sous-étape 3d qui commande alors la mise en pause de la publicité.

Le procédé reprend alors à la deuxième sous-étape 3b afin de détermine si l'emplacement vidéo comprenant la publicité satisfait à nouveau les critères de visibilité. Si tel est le cas, le procédé se poursuit à la quatrième sous-étape 3d qui commande alors la reprise de la lecture de la publicité

La figure 4 illustre un troisième mode de réalisation de la troisième étape 3 de commande de l'affichage de la publicité, similaire au premier mode de réalisation, et dans lequel les éléments similaires portent les mêmes références

A la différence du premier mode de réalisation, la page internet comprend plusieurs emplacements vidéo pour chacun desquels on détermine la satisfaction des critères de visibilité et d'affichage au cours des sous-étapes 3b et 3c.

Le procédé détermine alors à la quatrième sous étape 3d, dans quel emplacement vidéo doit être déplacée la publicité de l'emplacement vidéo temporaire. Toujours au cours de la quatrième sous étape 3d, on détermine, en fonction du déplacement du champ de vue de l'utilisateur si l'emplacement vidéo comprenant la vidéo satisfait les critères de visibilité et d'affichage. Si tel n'est pas le cas, on commande la mise en pause de la publicité et on commande son transfert dans un autre emplacement vidéo satisfaisant mieux les critères de visibilité et d'affichage. On commande ensuite la reprise de la lecture de la publicité dans l'autre emplacement vidéo à l'instant auquel elle a été mise en pause.

Le quatrième mode de réalisation, est une variante du troisième mode de réalisation dans la mesure où la publicité est déplacée dans un emplacement vidéo flottant situé en superposition du contenu de la page internet dès que l'emplacement vidéo comprenant la publicité ne satisfait plus les critères d'affichage. L'emplacement vidéo flottant est un emplacement vidéo dont la position est relative au champ de vue de l'utilisateur par opposition aux autres emplacements vidéo dont la position est relative à la page internet.

Dès quel l'on détermine qu'un autre emplacement vidéo que l'emplacement vidéo flottant satisfait les critères d'affichage, la publicité est transférée de l'emplacement vidéo flottant à l'emplacement vidéo satisfaisant les critères d'affichage.

Le procédé décrit ci-dessus peut être exécuté localement sur l'ordinateur de l'utilisateur, à distance sur des serveurs distants de l'ordinateur de l'utilisateur, situés par exemple dans la plate-forme publicitaire, ou par une combinaison d'exécutions locale et à distance.

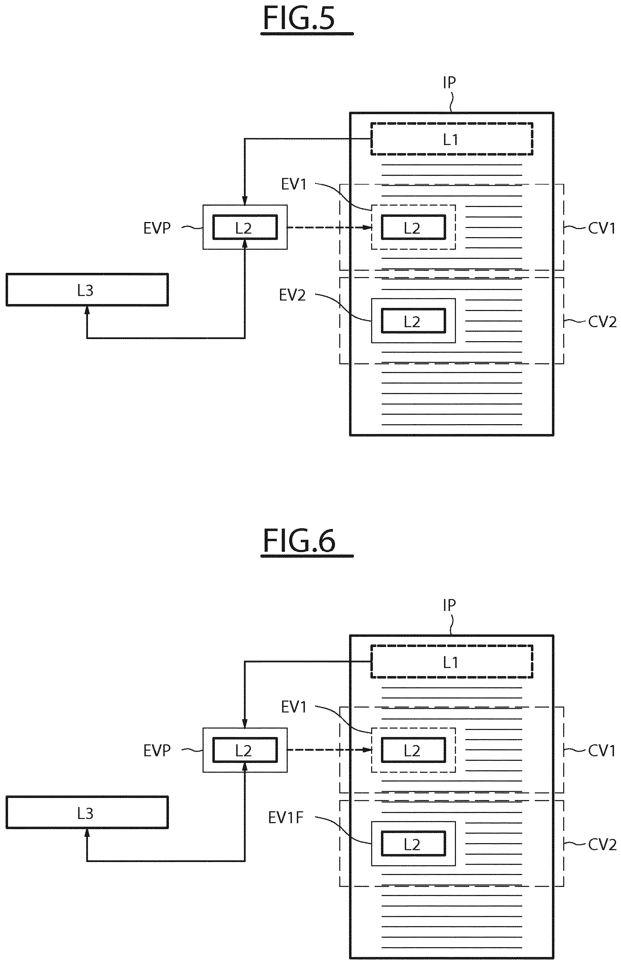

En particulier, l'invention peut comprendre un « script », un programme de lecture vidéo et une plate-forme publicitaire, présents sur les figures 5 et 6 qui illustrent leur fonctionnement dans des modes de réalisation impliquant le transfert de la publicité vidéo d'un emplacement comprenant la publicité vidéo vers respectivement un deuxième emplacement vidéo ou un emplacement idéo flottant satisfaisant tous deux les critères d'affichage alors que le champ de vision de l'utilisateur est passé d'une première position CV1 à une deuxième position CV2.

On appelle « script » un programme permettant de manipuler les fonctionnalités d'un système informatique. Dans le cas présent, le script permet de manipuler les éléments constitutifs d'une page web pour y ajouter un lecteur vidéo ainsi que différents emplacements permettant d'accueillir ce lecteur vidéo.

Par exemple, <script type='text/javascript'>var container = document.createElement(« div ») ; document.body.appendChild(container) ;</script> est un script permettant d'ajouter un élément HTML (type : div) à la fin de la page html dans laquelle il est exécuté.

Le « script » référencé L1 est développé dans un langage de programmation compatible avec la page internet dans laquelle il est installé, avec l'appareil de l'utilisateur affichant la page internet, et les logiciels associés (par exemple, le navigateur internet). On peut citer par exemple comme langage de programmation, le javascript, l'objective C, et le langage java.

Le script L1 réalise notamment les actions de collecte d'informations de la page internet et d'analyse de la mise en page réalisées au cours des deux premières étapes du procédé. Dans un autre mode de réalisation, le script L1 peut comprendre l'identification de l'internaute parmi les informations collectées.

Le programme de lecture vidéo référencé L2 est un logiciel, qui peut être communément développé sous les langages de programmation Flash et/ou HTML5 et qui permet la lecture d'une vidéo.

Le programme de lecture vidéo L2 comprend un composant permettant de gérer les métadonnées et paramètres des publicités (et peut donc notamment être compatible avec les normes VAST et/ou VPAID couramment utilisées).

Il peut comprendre également un composant permettant de gérer une liste de publicités, et de passer à la publicité suivante dans la liste si la publicité à afficher se révèle n'être pas compatible ou présenter un problème (par exemple, indisponibilité, des latences réseau l'empêchant de rapatrier tout ou partie du fichier vidéo dans des temps satisfaisants).

Le format du fichier vidéo peut notamment être le mpeg4, le H26x, le flv"... Le format n'est limité que par la programmation du programme de lecture vidéo.

Au cours de la requête de publicités vidéo auprès d'une plate-forme publicitaire L3 et de la lecture de la publicité (ou de sa mise en pause), le programme de lecture vidéo L2 peut également notifier des événements statistiques (tel que le démarrage de la publicité vidéo, la visibilité de la vidéo dans la page, le clic sur la publicité, etc.) à la plate-forme L3 ou directement à des applications tierces, définies dans les paramètres de la publicité vidéo.

Lorsque le programme de lecture vidéo L2 est appelé dans un emplacement vidéo EVP,EV1,EV2,EV1F, il se redimensionne à la taille définie de l'emplacement. Pour se redimensionner, il adopte la largeur de l'emplacement et une hauteur déterminée de sorte à respecter un ratio largeur/hauteur de la vidéo ou un ratio largeur/hauteur prédéfini, par exemple 16/9.

La plate-forme publicitaire référencé L3 est un logiciel disposé sur un serveur distant (ou distribué sur plusieurs serveurs pour des raisons de temps de réponse ou de performance) et accessible via un réseau, notamment le réseau Internet.

La plate-forme publicitaire L3 peut permettre de collecter, mettre à jour, adresser les critères concernant les informations relatives à la page internet, ainsi que d'éventuelle informations tierces. Dans un autre mode de réalisation, la plate-forme publicitaire L3 peut comprendre l'identification de l'internaute parmi les critères pris en compte.

La plate-forme publicitaire L3 peut permettre de collecter, mettre à jour, adresser des critères statiques ou dynamiques d'emplacement vidéo compatibles et optimum dans la page internet

La plate-forme publicitaire L3 peut recevoir des requêtes de publicité du programme de lecture vidéo et y répondre, adresser des demandes de publicité intégrant des informations complémentaires de ciblage aux tiers fournisseurs de publicités vidéo, recevoir et traiter leurs réponses.

La plate-forme publicitaire L3 peut sélectionner la publicité ou générer une liste de publicités à partir des publicités reçues des fournisseurs, des données collectées et par l'intermédiaire d'un algorithme prédéfini

La plate-forme publicitaire L3 peut collecter les événements statistiques de suivi adressés par le programme de lecture vidéo lors de la diffusion de publicité.

Sur les figures 5 et 6, on peut voir une page internet comprenant un script L1 apte à déterminer des données d'identification de l'utilisateur, des données d'identification de la page internet ainsi que la mise en page de la page internet. Le script L1 communique les informations de mise en page à la plate-forme publicitaire L3 afin de déterminer la présence d'emplacements vidéo dans lesquels la publicité vidéo peut être affichée.

Le script L1 déclenche alors la création d'un emplacement vidéo provisoire EVP de sorte qu'elle ne puisse être vue par l'utilisateur et qu'elle ne perturbe pas la mise en page de la page internet. Dans cet emplacement vidéo provisoire EVP, le script L1 déclenche le chargement du programme de lecture vidéo L2 et lui transmet les informations collectées.

Le programme de lecture vidéo L2 détermine alors la publicité à afficher. Pour réaliser cela, le programme de lecture vidéo L2 envoie une requête de publicité à afficher, par exemple à une plate-forme publicitaire L3, en fonction des informations d'identification de la page internet et des informations d'identification de l'utilisateur.

Le programme de lecture vidéo L2 reçoit en retour l'information d'une ou plusieurs publicités vidéo à afficher et leur ordre de diffusion. Lorsque plusieurs publicités vidéo sont à afficher, le programme de lecture vidéo L2 détermine la publicité à afficher.

Le programme de lecture vidéo fait appel à la première publicité vidéo de la liste. Si celle-ci est prête à être diffusée, il la met en pause. Si elle n'est pas valide ou si le temps de réponse à l'appel est excessif, il passe à la publicité suivante sur la liste jusqu'à trouver une publicité prête à être diffusée.

Le programme de lecture vidéo L2 commande alors son déplacement de l'emplacement vidéo provisoire EVP vers l'emplacement vidéo EV1 de la page internet et commande la reprise de la lecture de la publicité vidéo.

Sur les figures 5 et 6, on peut voir que le champ de vue de l'utilisateur est modifié d'une première position CV1 du champ de vue à une deuxième position CV2 du champ de vue. Les figures 5 et 6 se distinguent de par l'affichage de la publicité lors du déplacement du champ de vue de l'utilisateur.

En effet, sur la figure 5, le programme de lecture vidéo L2 détecte que l'emplacement vidéo EV1 dans lequel il est chargé ne satisfait plus les critères d'affichage du fait du déplacement du champ de vue de la première CV1 à la deuxième position CV2.

Il met la publicité vidéo en pause et détermine alors si d'autres emplacements vidéo satisfont mieux les critères d'affichage. S'il détermine qu'un deuxième emplacement vidéo EV2 satisfait mieux les critères d'affichage, il se déplace du premier emplacement vidéo EV1 au deuxième emplacement vidéo EV2 et reprend la lecture de la vidéo à l'instant de mise en pause. Le programme de lecture vidéo continue ensuite la surveillance du déplacement du champ de vue et modifie sa position afin de maintenir une satisfaction optimale des critères d'affichage.

La figure 6 illustre un autre mode de réalisation au cours duquel le programme de lecture vidéo L2 détecte que l'emplacement vidéo EV1 dans lequel il est chargé ne satisfait plus les critères d'affichage du fait du déplacement du champ de vue de la première CV1 à la deuxième position CV2.

Il met la publicité vidéo en pause et crée un emplacement vidéo flottant EV1F situé à une position relative par rapport au champ de vue de l'utilisateur. Le programme de lecture vidéo L2 se charge alors dans l'emplacement vidéo flottant EV1F et reprend la lecture de la vidéo à l'instant de mise en pause. Ainsi, quel que soit le déplacement du champ de vue de l'utilisateur, l'emplacement vidéo flottant EV1F demeure pleinement visible de sorte que les critères d'affichage sont satisfaits.

Toutefois, un tel affichage peut être perçu comme intrusif par l'utilisateur. Le programme de lecture vidéo maintient alors la surveillance de la satisfaction des critères d'affichage par les autres emplacements vidéo. Dès qu'un emplacement vidéo autre que l'emplacement vidéo flottant satisfait les critères d'affichage, le programme de lecture vidéo met en pause la lecture de la publicité vidéo, se déplace dans l'emplacement vidéo satisfaisant les critères d'affichage et reprendre la lecture de la publicité vidéo à l'instant de mise en pause.

Les modes de réalisation décrits ne sont pas exclusifs et peuvent être combinés selon les besoins de mise en oeuvre.

## Revendications

1. Procédé d'affichage dynamique d'au moins une publicité vidéo dans une page internet destinée à être vue par un utilisateur,
**caractérisé par le fait qu'**il comprend des étapes suivantes :
on détermine des informations identifiant la page internet,
on détermine au moins un emplacement vidéo dans la page internet dans lequel la publicité vidéo est à afficher en analysant la mise en page de la page internet en fonction du code source de la page internet ou en fonction d'un algorithme heuristique prédéfini, et en déterminant au moins un emplacement en fonction de la mise en page et de règles prédéfinies,
on détermine au moins une publicité vidéo à afficher en fonction des informations identifiant la page internet, et
on commande l'affichage de la publicité vidéo en fonction des positions déterminées des emplacements vidéo .

2. Procédé selon la revendication 1, dans lequel, pour déterminer au moins une publicité vidéo à afficher, on réalise les étapes suivantes :
s'il a été déterminé que la page internet comprend au moins un emplacement vidéo, on définit un emplacement vidéo provisoire, dans lequel on active un programme de lecture vidéo,
on envoie une requête de publicité à afficher, en fonction des informations identifiant la page internet,
on reçoit en retour la publicité à afficher,
on démarre la lecture de la publicité à afficher par l'intermédiaire du programme de lecture vidéo et on met la lecture en pause, puis
on déplace le programme vidéo de l'emplacement provisoire vers l'emplacement vidéo de la page internet et on reprend la lecture de la publicité.

3. Procédé selon la revendication 1, dans lequel, pour déterminer au moins une publicité vidéo à afficher, on réalise les étapes suivantes :
s'il a été déterminé que la page internet comprend au moins un emplacement vidéo, on définit un emplacement vidéo provisoire, dans lequel on active un programme de lecture vidéo,
on envoie une requête de publicité à afficher, en fonction des informations identifiant la page internet, et, simultanément, on déplace le programme vidéo de l'emplacement provisoire vers l'emplacement vidéo de la page internet,
on reçoit en retour la publicité à afficher,
on démarre la lecture de la publicité à afficher par l'intermédiaire du programme de lecture vidéo.

4. Procédé selon l'une quelconque des revendications précédentes, dans lequel, pour commander l'affichage de la publicité vidéo, on détermine le déplacement du champ de vue de l'utilisateur par rapport à la page internet,
dès qu'un déplacement est détecté, on détermine si l'emplacement vidéo comprenant la publicité vidéo satisfait des critères de visibilité.

5. Procédé selon la revendication 4, dans lequel les critères de visibilité d'un emplacement comprennent une valeur de seuil du rapport de la surface de l'emplacement divisé par la surface de l'emplacement visible par l'utilisateur.

6. Procédé selon la revendication 5, dans lequel on détermine le champ de vue de l'utilisateur, on détermine la partie de la page internet entrant dans le champ de vue de l'utilisateur, et on détermine si les critères de visibilité de l'emplacement sont satisfaits en fonction des positions respectives de l'emplacement dans la page internet et de la position de la partie de la page internet entrant dans le champ de vue.

7. Procédé selon la revendication 6, dans lequel on met à jour la partie de la page internet entrant dans le champ de vue de l'utilisateur en fonction de la partie de la page internet entrant dans le champ de vue précédemment déterminée et en fonction du déplacement de l'utilisateur sur cette page.

8. Procédé selon l'une quelconque des revendications 4 à 7, dans lequel, lorsque les critères de visibilité de l'emplacement comprenant la publicité vidéo ne sont plus satisfaits, on met en pause la publicité vidéo dans cet emplacement, puis,
lorsque les critères de visibilité d'un emplacement sont à nouveau satisfaits, on reprend dans cet emplacement la lecture de la publicité vidéo qui a été mise en pause.

9. Procédé selon l'une quelconque des revendications 4 à 7, dans lequel la page internet comprend un premier emplacement vidéo et au moins un deuxième emplacement vidéo, le premier emplacement vidéo comprenant la publicité vidéo,
le procédé comprenant des étapes suivantes :
lorsque les critères de visibilité du premier emplacement vidéo ne sont plus satisfaits, on met en pause la publicité vidéo, puis
lorsque les critères de visibilité d'un deuxième emplacement sont satisfaits, on reprend dans le deuxième emplacement la publicité vidéo qui a été mise en pause dans le premier emplacement.

10. Procédé selon l'une quelconque des revendications précédentes, dans lequel un emplacement vidéo est soit inséré dans le contenu de la page internet soit en superposition du contenu de la page internet.

11. Procédé selon l'une quelconque des revendications précédentes, dans lequel on détermine localement ou sur un serveur distant les informations identifiant la page internet et/ou au moins un contenu vidéo à afficher.

12. Système d'affichage dynamique d'au moins une publicité vidéo dans une page internet destinée à être vue par un utilisateur par comprenant
un script compris dans la page internet, apte à déterminer des informations identifiant la page internet, et à déterminer au moins un emplacement vidéo dans la page internet dans lequel la publicité vidéo est à afficher en analysant la mise en page de la page internet en fonction du code source de la page internet ou en fonction d'un algorithme heuristique prédéfini, et en déterminant au moins un emplacement en fonction de la mise en page et de règles prédéfinies,
un programme de lecture vidéo exécuté par l'utilisateur apte à requérir la publicité à afficher et à commander l'affichage la publicité vidéo dans la page internet, et
une plate-forme publicitaire est apte à recevoir les requêtes de publicités vidéo du programme de lecture vidéo, à adresser des requêtes de publicité à des tiers fournisseurs e publicités vidéo et à émettre une publicité vidéo ou une liste de publicités vidéo à destination du programme de lecture vidéo à partir des informations identifiant la page internet et la mise en page de la page internet reçues du script par l'intermédiaire du programme de lecture vidéo.
